# EUROPÄISCHE PATENTSCHRIFT

(11) **EP 2 512 772 B1**
(45) Veröffentlichungstag und Bekanntmachung des Hinweises auf die Patenterteilung: **16.10.2013**
(21) Anmeldenummer: 10793228.7
(22) Anmeldetag: 15.12.2010
(51) Int. Cl.: B29C 45/16

(54) **VERFAHREN ZUM HERSTELLEN EINES MEHRKOMPONENTIGEN KUNSTSTOFF-FORMTEILS MITTELS SPRITZGUSSTECHNIK SOWIE SPRITZGIESSVORRICHTUNG ZUR DURCHFÜHRUNG DES VERFAHRENS**
METHOD FOR PRODUCING A MULTICOMPONENT PLASTIC MOLDED PART BY MEANS OF INJECTION MOLDING, AND INJECTION MOLDING DEVICE FOR PERFORMING THE METHOD
PROCÉDÉ POUR LA FABRICATION D'UNE PIÈCE MOULÉE EN PLASTIQUE À PLUSIEURS COMPOSANTS PAR LA TECHNIQUE DE MOULAGE PAR INJECTION AINSI QUE DISPOSITIF DE MOULAGE PAR INJECTION DESTINÉ À LA RÉALISATION DU PROCÉDÉ

(30) Priorität: 16.12.2009 CH 19292009
(43) Veröffentlichungstag der Anmeldung: 24.10.2012
(73) Patentinhaber: Foboha GmbH Formenbau, 77716 Haslach (DE)
(72) Erfinder: ARMBRUSTER, Rainer, 77709 Wolfach (DE)
(74) Vertreter: Rentsch Partner AG
(86) Internationale Anmeldenummer: PCT/EP2010/069763
(87) Internationale Veröffentlichungsnummer: WO 2011/083002

(56) Entgegenhaltungen:
- EP-A1- 1 612 024
- EP-A1- 1 810 811
- EP-A1- 1 974 886
- AT-U1- 11 190
- DE-B3-102006 019 007
- JP-A- 59 199 227
- US-A1- 2004 094 866
- US-A1- 2006 249 876

## Beschreibung

Die vorliegende Erfindung bezieht sich auf das Gebiet der KunststoffSpritzgiesstechnik. Sie betrifft ein Verfahren zum Herstellen eines mehrkomponentigen Kunststoff-Formteils mittels Spritzgusstechnik gemäss dem Oberbegriff des Anspruchs 1 sowie eine Spritzgiessvorrichtung zur Durchführung des Verfahrens.

Es sind seit Längerem Verfahren und Vorrichtungen zur Herstellung von Kunststoff-Formteilen bekannt, die sich aus mehreren nacheinander gespritzten Kunststoffen zusammensetzen.

So sind in der Druckschrift DE-C1-196 50 854 ein Verfahren und eine Vorrichtung zur Herstellung eines Mehrschicht-Kunststoffteils offenbart, bei dem zyklussynchron das Kunststoffteil und die daran angespritzte 2-Komponenten-Duroplastschicht im selben Werkzeug gespritzt werden. Dafür ist eine bewegbare, insbesondere drehbare Vorrichtung mit mindestens zwei Spritzgusswerkzeugen vorgesehen, die gleiche Werkzeughälften aufweisen, denen an der Spritzdüse und an der Mischdüse unterschiedlich tiefe Matrizen zugeordnet sind. Eine vollständige Umhüllung des zuerst gespritzten Kunststoffteils ist mit dieser Technik nicht möglich.

Aus der EP-B1-1 428 645 bzw. der DE-T2-603 13 563 sind ein Verfahren und eine Vorrichtung zur Herstellung von aus mindestens zwei Komponenten bestehenden Spritzgussteilen bekannt, bei denen ein erstes Spritzgussteil aus einer ersten Komponente in einem ersten Formwerkzeughohlraum geformt wird und ein zweites Spritzgussteil geformt wird, indem das erste Spritzgussteil in einen zweiten Formwerkzeughohlraum gebracht und indem eine zweite Komponente auf dem ersten Spritzgussteil angebracht wird. Für die in einer Ausführungsform notwendige Umpositionierung wird eine Transfervorrichtung eingesetzt (siehe z.B. die Fig. 1 der Druckschrift). In einer anderen Ausführungsform (Fig. 9 der Druckschrift) wird eine Drehung der Formhälften um zwei Achsen eingesetzt, um an das erste Spritzgussteil von nur einer Seite eine weitere Komponente anzuspritzen. Dasselbe gilt auch bei weiteren Ausführungsformen (Fig. 10-13 der Druckschrift), bei denen mehrere Formwerkzeugteile (12A-12D) nach Art eines Kubus um eine vertikale Drehachse (53) drehbar sind. Eine vollständige Umhüllung des ersten Kunststoffteils ist mit dieser Lösung nicht möglich.

Ähnliche Lösungen sind auch aus der WO-A2-2005/007381, der EP-A1-1 226 916, der WO-A1-00/73040 oder der WO-A1-98/35808 bekannt.

Die Druckschrift DE-A1-10 2004 032 362 offenbart ein Verfahren zur Herstellung eines Verbund-Bauteils, bei dem eine Metall-Armierungskomponente in die Spritzgussform eingelegt und die sie umgebenden beiden Kunststoffkomponenten durch einen Mehrkomponenten-Spritzvorgang hergestellt werden. Die beiden Kunststoffkomponenten werden daher mit dem gleichen Typ eines Fertigungsverfahrens, nämlich durch Spritzgiessen, mit der Armierungskomponente verbunden. Dieser Vorgang des Umhüllens bedingt das Einlegen eines vorgefertigten Kernelements in die Spritzgiessvorrichtung und ist daher für die integrierte spritzgusstechnische Herstellung des Kernelements nicht geeignet.

Dasselbe gilt auch für das in der US-A1-2008/0296802 beschriebene Verfahren zur Herstellung eines Golfballs, bei dem ein anderweitig vorgefertigter, kugelförmiger Kern in eine Spritzgiessvorrichtung eingebracht und nacheinander durch zwei Spritzgiessvorgänge mit einer ersten Kunststoffschicht umhüllt wird. Zur Erzeugung der beiden halbkugelförmigen Umhüllungshälften werden die Formhälften gegeneinander verdreht.

Aus der WO-A1-2005/077637 sind schliesslich ein Verfahren und eine Vorrichtung zum Spritzgiessen und Montieren von Kunststoffteilen bekannt, bei denen zur Herstellung eines mehrteiligen Produktes in einer Spritzgiessvorrichtung gleichzeitig ein erstes und ein zweites Teil in einer ersten und einer dritten äusseren Trennebene einer geschlossenen Spritzgiessvorrichtung durch Einspritzen von flüssigem Kunststoff in Kavitäten erzeugt werden und die beiden Teile im Bereich einer zweiten mittleren Trennebene mittels einem Wirkverbindungsmittel miteinander verbunden werden, wobei die in der ersten und der dritten Trennebene hergestellten ersten und zweiten Teile mittels dem zugehörigen ersten und zweiten Formträger an diesen haftend um vertikale Achsen in die dritte Trennebene gedreht werden. Die Verbindung kann dabei auch durch Umspritzen bewirkt werden. Die Herstellung und Umhüllung eines einstückigen Kerns ist nicht offenbart.

Es ist daher Aufgabe der Erfindung, ein Verfahren und eine Vorrichtung anzugeben, mit welchen auf einfache Weise in einer kompakten Anlage ein einstückiger Zentralkörper hergestellt und durch Anspritzen von mehreren Seiten zu einem mehrkomponentigen Kunststoff-Formteil weitergebildet, insbesondere allseitig umhüllt wird.

Die Aufgabe wird durch die Gesamtheit der Merkmale der Ansprüche 1 und 11 gelöst.

Das erfindungsgemässe Verfahren zeichnet sich dadurch aus, dass in einem ersten Schritt ein in einer ersten Formhälfte sitzender Zentralkörper bereitgestellt wird, in einem zweiten Schritt die erste Formhälfte mit dem darin sitzenden Zentralkörper durch eine zweite Formhälfte zu einer ersten geschlossenen Form ergänzt wird, in welcher der Zentralkörper an eine durch die zweite Formhälfte gebildete erste Kavität angrenzt, in einem dritten Schritt durch Einspritzen eines ersten Kunststoffs in die erste Kavität ein erster Anspritzteil an den Zentralkörper angespritzt wird, in einem vierten Schritt die erste Form durch Abheben der ersten Formhälfte geöffnet, in einem fünften Schritt die zweite Formhälfte mit der darin verbliebenen Kombination aus Zentralkörper und erstem Anspritzteil durch eine dritte Formhälfte zu einer zweiten geschlossenen Form ergänzt wird, in welcher der Zentralkörper an eine durch die dritte Formhälfte gebildete zweite Kavität angrenzt, und in einem sechsten Schritt durch Einspritzen eines zweiten Kunststoffs in die zweite Kavität ein zweiter Anspritzteil an den Zentralkörper angespritzt wird, wobei im ersten Schritt aus der ersten Formhälfte und einer vierten Formhälfte eine dritte geschlossene Form mit einer dritten Kavität gebildet und der Zentralkörper durch Einspritzen eines dritten Kunststoffs in die dritte Kavität erzeugt wird.

Vereinfacht ausgedrückt wird der Zentralkörper in einer ersten Form durch einen ersten Spritzgiessprozess hergestellt, verbleibt dann in einer der Formhälften, die mit einer neuen Formhälfte zu einer zweiten Form ergänzt wird, die in einem zweiten Spritzgiessprozess dem einseitigen Anspritzen eines Anspritzteils an den Zentralkörper dient. Der einseitig angespritzte Zentralkörper wird dann in der neuen Formhälfte belassen, die mit einer weiteren Formhälfte zu einer dritten Form ergänzt wird, die in einem dritten Spritzgiessprozess dem einseitigen Anspritzen eines zweiten Anspritzteils an den Zentralkörper dient. Insbesondere können beide Anspritzvorgänge zu einer vollständigen Umhüllung des Zentralkörpers führen.

Apparativ besonders einfach lässt sich das erfindungsgemässe Verfahren verwirklichen, wenn gemäss einer Ausgestaltung zum Schliessen und Öffnen der drei Formen die entsprechenden Formhälften entlang einer gemeinsamen Schliessachse relativ zueinander verfahren werden, wie dies beispielsweise bei einer Konfiguration der eingangs genannten WO-A1-2005/077637 oder WO-A2-2005/007381 der Fall ist.

In diesem Zusammenhang ist es vorteilhaft, wenn sich die zweite Formhälfte und die vierte Formhälfte einander gegenüber stehen, und wenn zwischen dem ersten und dem zweiten Schritt die erste Formhälfte mit dem darin sitzenden Zentralkörper um eine senkrecht zur Schliessachse orientierte erste Drehachse gedreht wird.

Gemäss einer Weiterbildung sind die erste Formhälfte und die dritte Formhälfte nebeneinander und parallel zueinander auf einem gemeinsamen Formträger angeordnet, wobei zwischen dem vierten und dem fünften Schritt die zweite Formhälfte mit der darin verbliebenen Kombination aus Zentralkörper und erstem Anspritzteil quer zur Schliessachse von einer der ersten Formhälfte gegenüberliegenden Position zu einer der dritten Formhälfte gegenüberliegenden Position verfahren wird.

Insbesondere kann dabei die zweite Formhälfte mit der darin verbliebenen Kombination aus Zentralkörper und erstem Anspritztell linear verfahren werden.

Es ist aber auch ebenso gut denkbar, dass die zweite Formhälfte mit der darin verbliebenen Kombination aus Zentralkörper und erstem Anspritzteil um eine parallel zur Schliessachse orientierte zweite Drehachse gedreht wird.

Eine andere Ausgestaltung des efindungsgemässen Verfahrens zeichnet sich dadurch aus, dass die dritte Formhälfte und die vierte Formhälfte einander gegenüber stehen, dass zwischen dem ersten und dem zweiten Schritt die erste Formhälfte mit dem darin sitzenden Zentralkörper um eine senkrecht zur Schliessachse orientierte erste Drehachse gedreht wird, und dass zwischen dem vierten und dem fünften Schritt die zweite Formhälfte mit der darin verbliebenen Kombination aus Zentralkörper und erstem Anspritzteil um eine senkrecht zur Schliessachse orientierte dritte Drehachse gedreht wird. Ein solches Verfahren lässt sich beispielsweise mit einer Vorrichtung gemäss der eingangs genannten WO-A1-2005/077637 verwirklichen.

Im Rahmen des erfindungsgemässen Verfahrens können als erster, zweiter und dritter Kunststoff unterschiedliche Kunststoffe verwendet werden.

Es ist aber auch denkbar, dass als erster und zweiter Kunststoff der gleiche Kunststoff verwendet wird, und dass der erste und zweite Anspritzteil den Zentralkörper in Form einer Umhüllung vollständig umschliessen.

Besonders wirtschaftlich kann das erfindungsgemässe Verfahren betrieben werden, wenn gemäss einer anderen Ausgestaltung mit einer Mehrzahl von parallel eingesetzten Formen bzw. Formhälften gleichzeitig mehrere Kunststoff-Formteile hergestellt werden.

Die erfindungsgemässe Spritzgiessvorrichtung zur Durchführung des Verfahrens zeichnet sich dadurch aus, dass sie wenigstens drei entlang einer gemeinsamen Schliessachse hintereinander angeordnete und entlang der Schliessachse relativ zueinander verfahrbare Formträger umfasst, wobei ein mittlerer Formträger um eine senkrecht zur Schliessachse orientierte erste Drehachse drehbar ist, und wenigstens einer der anderen Formträger in einer Ebene quer zur Schliessachse bewegbar ist.

Insbesondere kann wenigstens einer der anderen Formträger in der Ebene quer zur Schliessachse linear verfahrbar sein.

Ebenso gut kann aber auch wenigstens einer der anderen Formträger um eine parallel zur Schliessachse orientierte zweite Drehachse drehbar sein.

Gemäss einer Ausgestaltung der erfindungsgemässen Spritzgiessvorrichtung sind die erste Formhälfte und die dritte Formhälfte nebeneinander und parallel zueinander auf dem mittleren Formträger angeordnet sind.

Besonders vorteilhaft ist es, wenn auf den Formträgern zur gleichzeitigen Herstellung einer Vielzahl von Kunststoff-Formteilen jeweils eine Vielzahl von gleichartigen Formhälften nebeneinander angeordnet ist.

Die Erfindung soll nachfolgend anhand von Ausführungsbeispielen im Zusammenhang mit der Zeichnung näher erläutert werden. Es zeigen
- Fig. 1: in mehreren Teilfiguren 1(a) bis 1(k) in einer stark vereinfachten schematischen Darstellung die verschiedenen Schritte bei einem Verfahren gemäss einem ersten Ausführungsbeispiel der Erfindung;
- Fig. 2: in mehreren Teilfiguren 2(a) bis 2(k) in einer stark vereinfachten schematischen Darstellung die verschiedenen Schritte bei einem Verfahren gemäss einem zweiten Ausführungsbeispiel der Erfindung;
- Fig. 3: die stark vereinfachte Konfiguration einer Spritzgiessvorrichtung aus dem Stand der Technik mit einem um eine vertikale Drehachse drehbaren, zentralen Formträger;
- Fig. 4: eine zu Fig. 3 vergleichbare Vorrichtung, bei der zusätzlich einer der äusseren Formträger um eine horizontale Drehachse drehbar ist, und die zur Durchführung des erfindungsgemässen Verfahrens geeignet ist;
- Fig. 5: in mehreren Teilfiguren 5(a) bis 5(h) die verschiedenen Schritte bei einem Ausführungsbeispiel des efindungsgemässen Verfahrens mit einer Anlagenkonfiguration, wie sie in Fig. 4 gezeigt ist;
- Fig. 6: die abweichenden Verfahrenschritte bei einem zu Fig. 5 alternativen Ausführungsbeispiel, bei dem anstelle einer Drehung des äusseren Formträgers eine lineare Verschiebung vorgenommen wird; und
- Fig. 7: die stark vereinfachte Konfiguration einer Spritzgiessvorrichtung aus dem Stand der Technik gemäss der WO-A1-2005/077637, wie sie zur Durchführung des erfindungsgemässen Verfahrens einsetzbar ist.

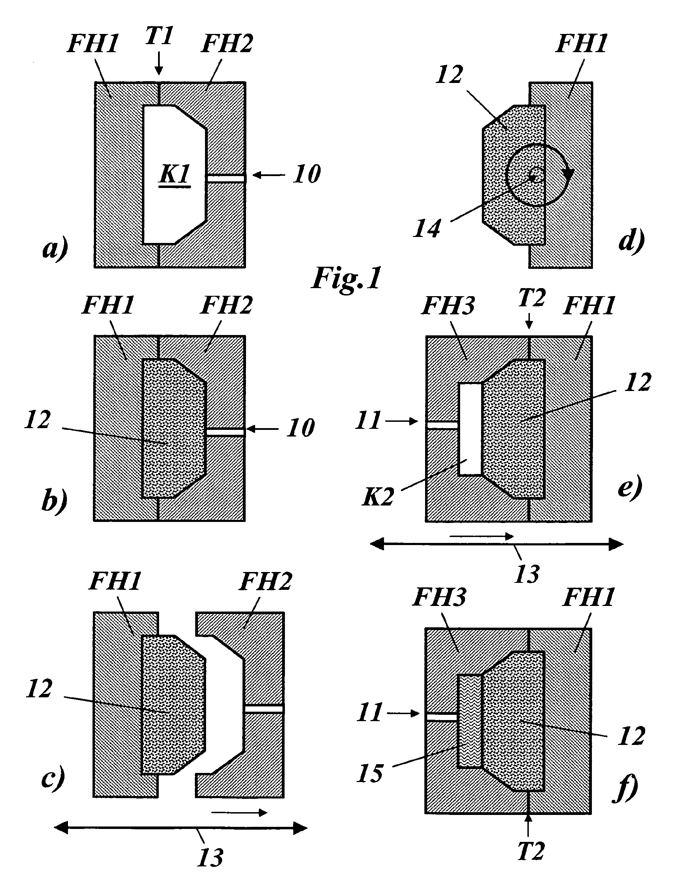

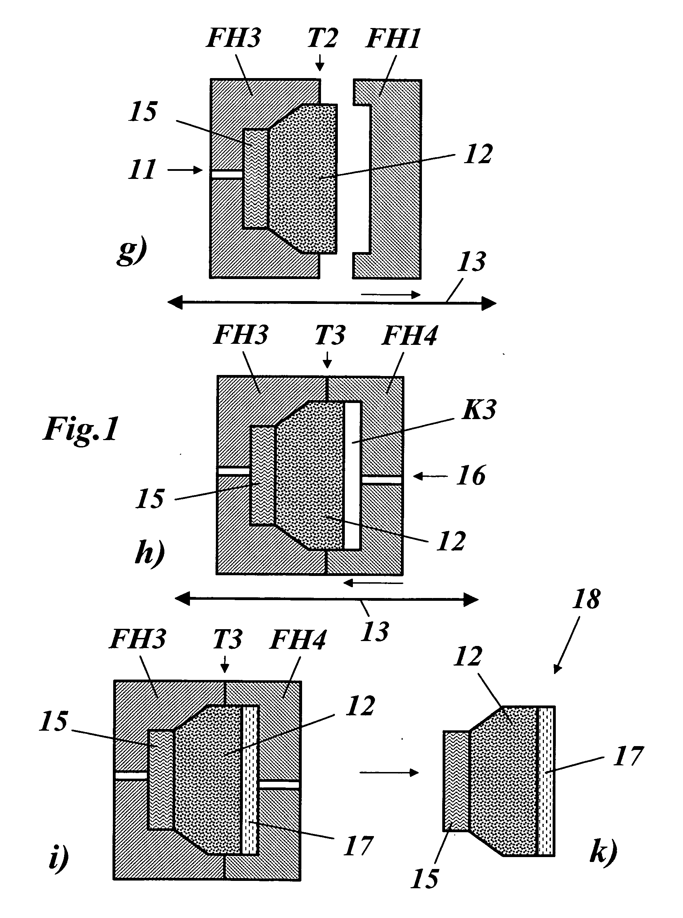

In Fig. 1 werden in den Teilfiguren Fig. 1a bis Fig. 1k in einer stark vereinfachten schematischen Darstellung die verschiedenen Schritte bei einem Verfahren gemäss einem ersten Ausführungsbeispiel der Erfindung wiedergegeben. Das Verfahren wird anhand der Herstellung nur eines Körpers erläutert. Es versteht sich von selbst, dass in der Anwendung üblicherweise gleichzeitig eine Vielzahl derartiger Körper in entsprechenden Mehrfachformen hergestellt wird.

Ausgangspunkt des Verfahrens ist gemäss Fig. 1a eine aus zwei Formhälften FH1 und FH2 entlang einer ersten Trennebene T1 zusammengesetzte Spritzgiessform, die eine erste Kavität K1 umschliesst und durch einen Einspritzkanal 10 mit einem ersten Kunststoff gefüllt wird (Fig. 1 b). Nach dem Festwerden des eingespritzten Kunststoffs liegt in der Kavität ein Zentralkörper 12 vor, an den in den weiteren Schritten von zwei Seiten Anspritzteile 15, 17 angespritzt werden sollen.

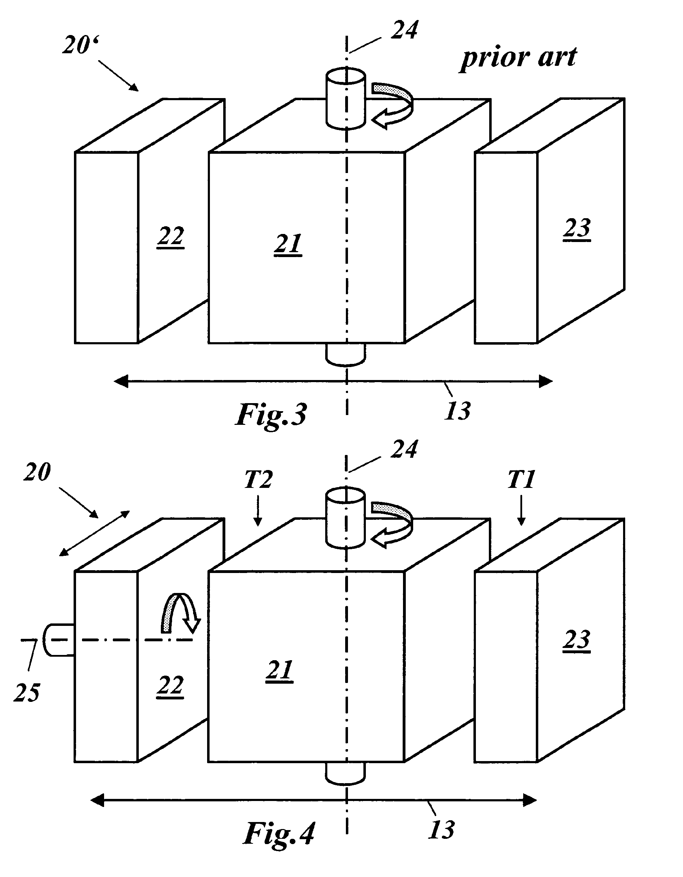

Dazu wird zunächst die zweite Formhälfte FH2 in Richtung einer gemeinsamen Schliessachse 13 abgezogen, während der gebildete Zentralkörper 12 in der ersten Formhälfte FH1 sitzen bleibt (Fig. 1c). Die erste Formhälfte FH1 mit dem darin befindlichen Zentralkörper 12 wird dann um eine senkrecht zur Schliessachse 13 stehende Drehachse 14 um 180° gedreht (Fig. 1d) und dann mit einer dritten Formhälfte FH3 entlang einer zweiten Trennebene zu einer neuen Spritzgiessform ergänzt, in der an den Zentralkörper 12 an einer Seite eine zweite Kavität K2 angrenzt, die durch einen Einspritzkanal 11 mit einem weiteren Kunststoff gefüllt werden kann (Fig. 1 e). Die Drehung um die Drehachse 14 kann bei Konfigurationen gemäss Fig. 4, bei denen der (kubische) zentrale Formträger an vier Seiten mit Formhälften ausgestattet sein kann, in zwei Drehschritte zu je 90° unterteilt sein. Das Zusammenfügen der Formhälften FH1 und FH3 erfolgt wiederum entlang der Schliessachse 13.

Durch Einspritzen eines weiteren Kunststoffs in die zweite Kavität K2 wird dem Zentralkörper 12 einseitig ein Anspritzteil 15 angespritzt (Fig. 1f). Ist der Anspritzteil 15 verfestigt, wird die Form durch Abziehen der ersten Formhälfte FH1 in Richtung der Schliessachse geöffnet, wobei der Zentralkörper 12 mit dem angespritzten Anspritzteil 15 in der dritten Formhälfte FH3 verbleibt (Fig. 1 g).

Die dritte Formhälfte FH3 mit dem Körper 12, 15 wird dann mit Hilfe einer vierten Formhälfte FH4 zu einer neuen Form mit der dritten Trennebene T3 komplettiert (Fig. 1 h), in der auf der anderen Seite des Zentralkörpers 12 eine dritte Kavität K3 angrenzt, die durch einen Einspritzkanal 16 mit einem dritten Kunststoff gefüllt werden kann.

Durch Füllen der dritten Kavität K3 mit einem dritten Kunststoff wird dem Zentralkörper 12 an der anderen Seite ein zweiter Anspritzteil 17 angespritzt (Fig. 1 i). Nach dem Verfestigen des zweiten Anspritzteils 17 kann das von zwei Seiten angespritzte Kunststoff-Formteil 18 entnommen werden (Fig. 1 k).

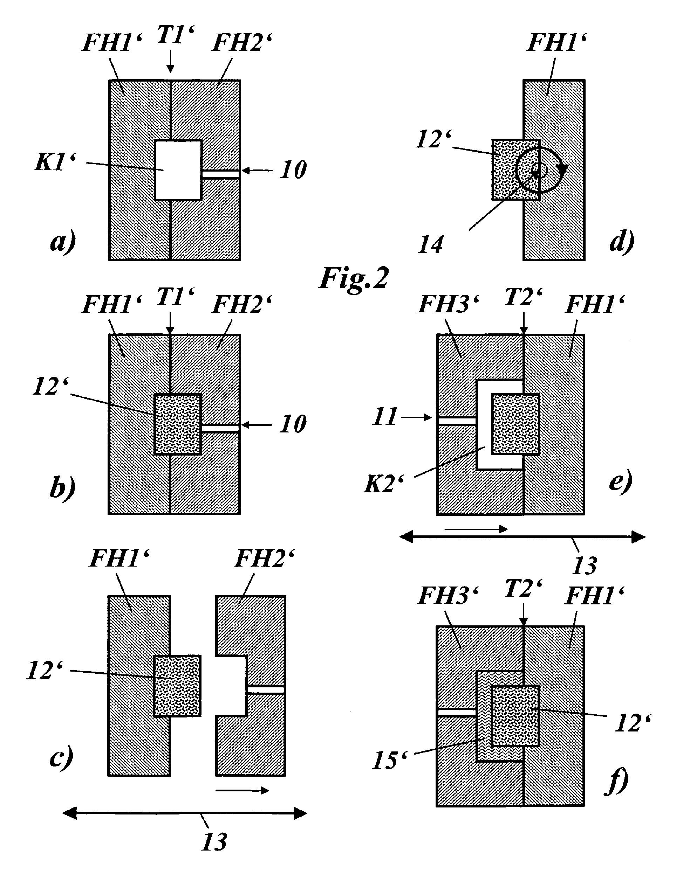

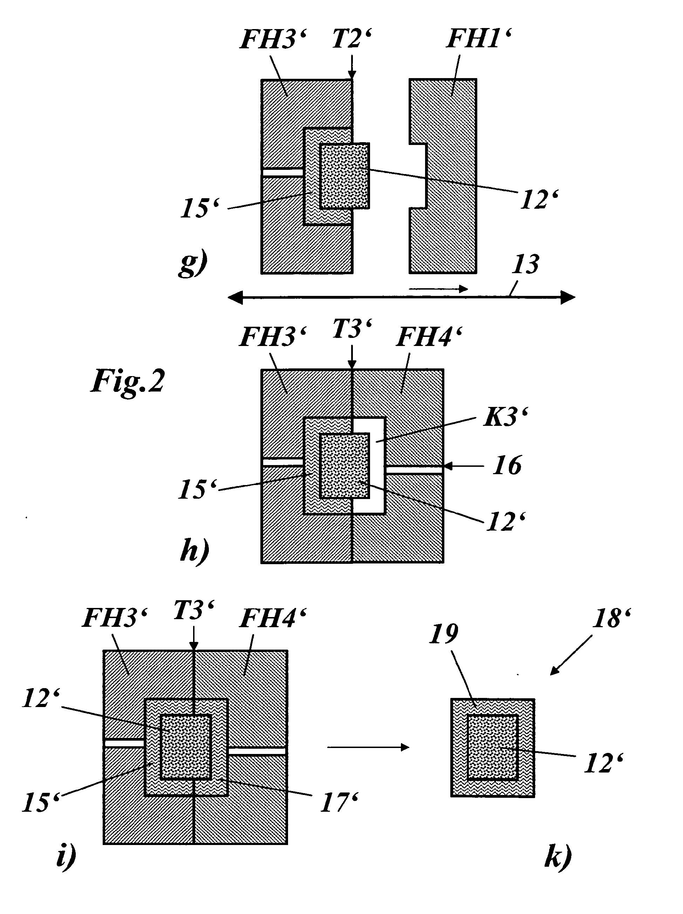

Bei dem in Fig. 2 in den Teilfiguren 2a bis 2k dargestellten Verfahren, bei dem - ähnlich wie in Fig. 1 - die Formhälften FH1' bis FH4' benutzt werden, um in den Kavitäten K1', K2' und K3' mit den Trennebene T1' bis T3' sukzessive einen Zentralkörper 12' mit Anspritzteilen 15' und 17' zu erzeugen, wird durch geeignete Ausgestaltung der Formhälften FH1',..,FH4' und Verwendung des selben Kunststoffs für die Anspritzteile 15' und 17' ein Kunststoff-Formteil 18' geschaffen, bei dem der Zentralkörper 12' vollständig von einer Umhüllung 19 umschlossen ist (Fig. 2k).

Eine Möglichkeit, die Verfahren gemäss Fig. 1 und 2 durchzuführen, bietet eine Spritzgiessvorrichtung 20 gemäss Fig. 4, bei der entlang einer gemeinsamen Schliessachse 13 drei Formträger 21, 22 und 23 hintereinander angeordnet und relativ zueinander entlang der Schliessachse verfahrbar gelagert sind. Der mittlere Formträger 21 ist um eine vertikal zur Schliessachse 13 orientierte Drehachse 24 drehbar, derart, dass eine auf dem mittleren Formträger 21 direkt gegenüber dem äusseren Formträger 23 angeordnete Formhälfte (in Fig. 4 nicht gezeigt) durch Drehung des zentralen Formträgers 21 um 180° in eine dem äusseren Formträger 22 direkt gegenüberliegende Position bewegt werden kann. Auf diese Weise kann eine solche Formhälfte nacheinander mit einer auf dem Formträger 23 angeordneten Formhälfte eine erste Form und - nach der Drehung um 180° - mit einer auf dem Formträger 22 angeordneten weiteren Formhälfte eine zweite Form bilden, wie dies in den Fig. 1 und 2 mit den Formhälften FH1, FH2 und FH3 bzw. FH1', FH2' und FH3' in den Teilfiguren 1a bis 1f bzw. 2a bis 2f gezeigt ist.

Die bei den Verfahren gemäss Fig. 1 und 2 notwendige dritte Form wird in der Spritzgiessvorrichtung 20 nach Fig. 4 dadurch erreicht, dass der eine äussere Formträger 22 - anders als bei der bekannten Spritzgiessvorrichtung 20' aus Fig. 3 - um eine parallel zur Schliessachse 13 orientierte Drehachse 25 drehbar ist. Auf dieses Weise ist es möglich, die auf dem Formträger 22 angeordnete Formhälfte nach einer Drehung um 180° (oder 90°) mit einer weiteren Formhälfte (FH4 in Fig. 1, FH4' in Fig. 2) zur Bildung einer dritten Form zusammenzubringen, wenn diese weitere Formhälfte an einer entsprechenden, durch Rotation um die Drehachse 25 erreichbaren Position auf dem zentralen Formträger 21 angeordnet ist.

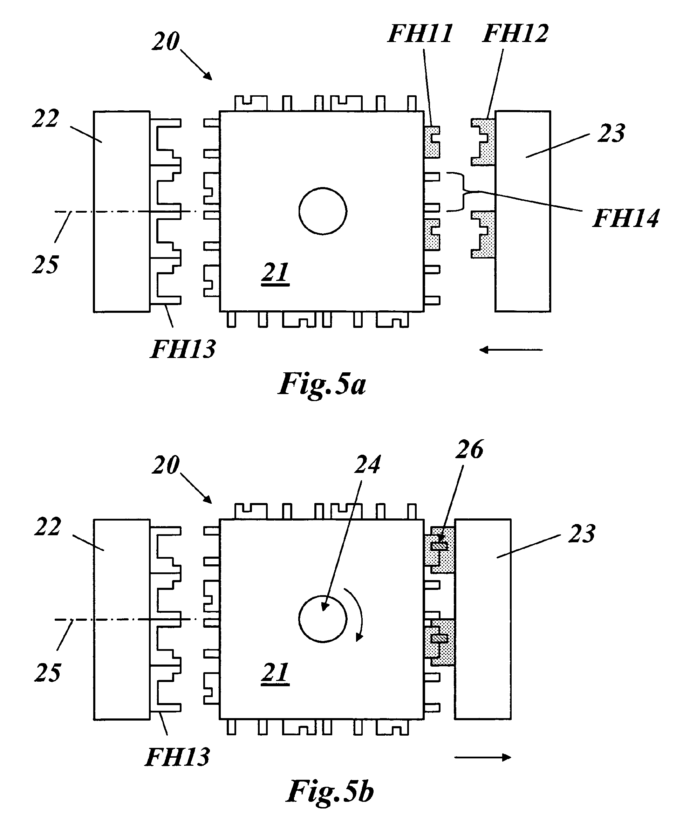

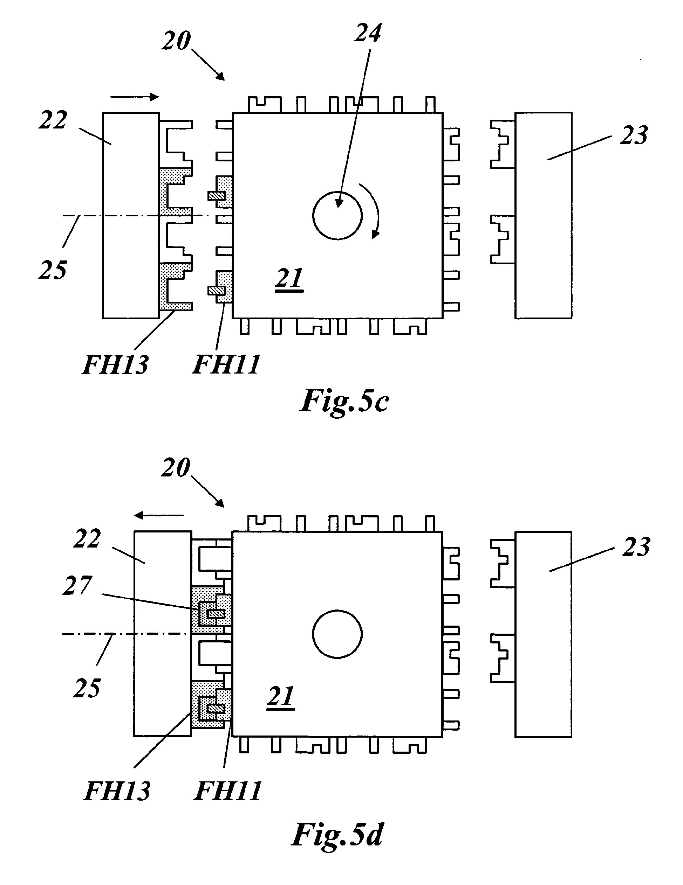

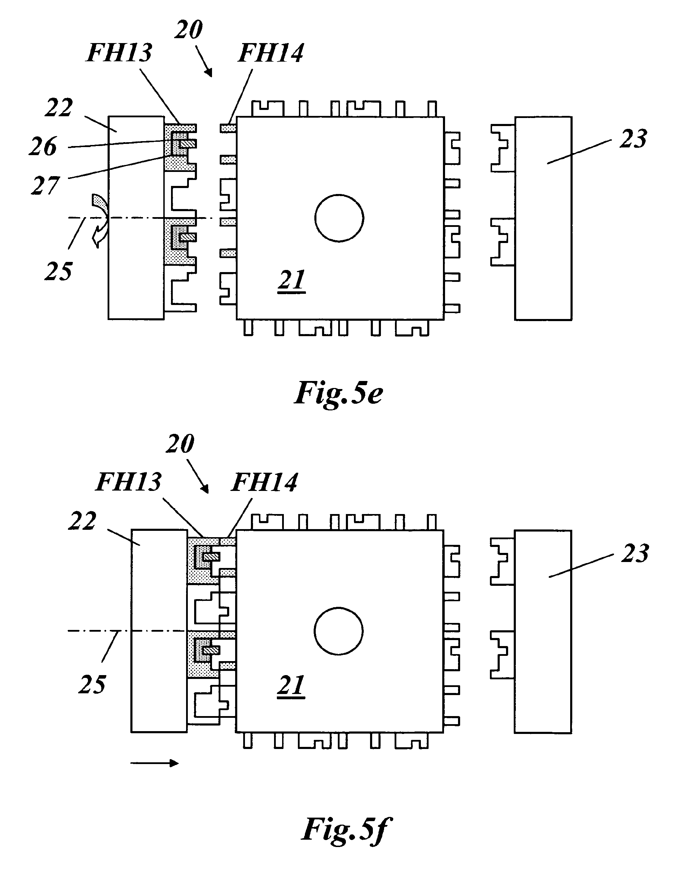

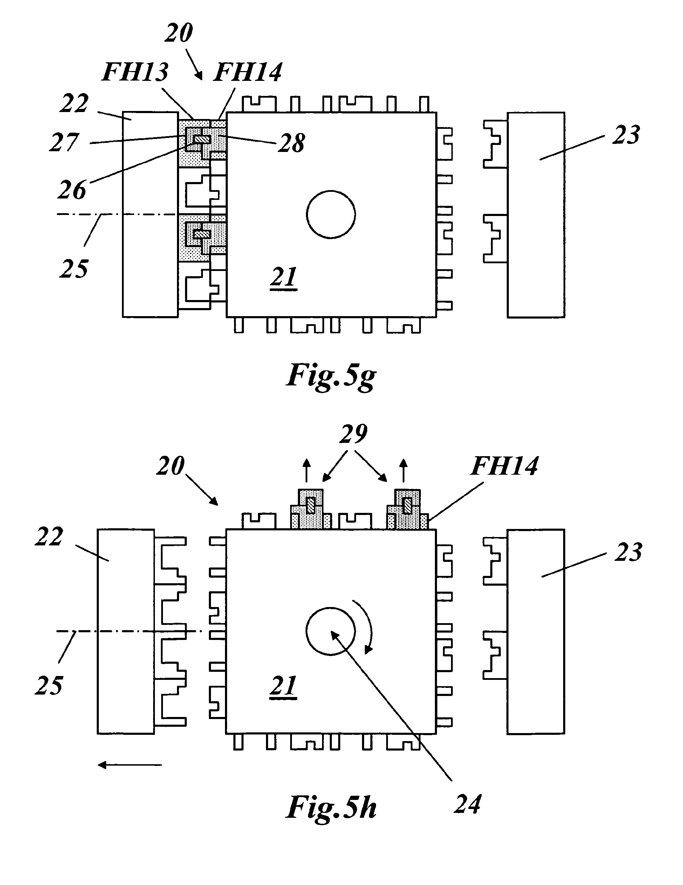

Dies wird in den nachfolgend erläuterten Teilfiguren 5a bis 5h der Fig. 5 deutlich: Fig. 5 zeigt eine Spritzgiessvorrichtung 20 gemäss Fig. 4 in der Draufsicht von oben. Die drei Formträger 21, 22 und 23 sind in mehrfacher Anordnung mit geeigneten Formhälften FH11, FH12, FH13 und FH14 ausgerüstet, die den Formhälften FH1 bis FH4 bzw. FH1' bis FH4' der Fig. 1 bzw. Fig. 2 entsprechen.

Am Anfang des Verfahrens stehen sich die Formhälften FH11 und FH12 auf den Formträgern 21 und 23 gegenüber (Fig. 5a) und bilden, nachdem sie in Richtung der Schliessachse 13 gegeneinander verfahren worden sind, zusammen in mehrfacher Ausfertigung eine erste Form mit einer ersten Kavität, in der durch Einspritzen eines ersten Kunststoffs ein Zentralkörper 26 gebildet wird (Fig. 5b).

Nach dem Lösen der zweiten Formhälfte FH12 wird der zentrale Formträger 21 mit den Formhälften FH11 und den darin befindlichen Zentralkörpern 26 um 180° um die Drehachse 24 gedreht (Fig. 5c), so dass die Formhälften FH11 nunmehr den Formhälften FH13 auf dem anderen äusseren Formträger FH13 gegenüberliegen. Nach dem Schliessen der durch die Formhälften FH11 und FH13 gebildeten Form (Pfeil in Fig. 5c) kann an den Zentralkörper 26 von einer Seite ein Anspritzteil 27 angespritzt werden (Fig. 5d).

Nach dem Verfestigen des ersten Anspritzteils 27 werden die Formhälften FH11 und FH13 voneinander getrennt (Pfeil in Fig. 5d), wobei der Zentralkörper 26 mit dem angespritzten Anspritzteil 27 in der Formhälfte FH13 verbleibt. Durch Drehen des abgezogenen äusseren Formträgers 22 mit den Formhälften FH13 um die Drehachse 25 werden die Formhälften FH13 auf die versetzt auf dem Formträger 21 angeordneten Formhälften FH14 ausgerichtet (Fig. 5e).

Nach dem Schliessen der Formhälften FH13 und FH14 (Fig. 5f) kann die entstehende Kavität unter Ausbildung eines zweiten Anspritzteils 28 am Zentralkörper 26 mit Kunststoff gefüllt werden (Fig. 5g). Nach dem Öffnen der Form und weiterdrehen des Formträgers 21 um 90° können die fertigen Kunststoff-Formteile 29 seitlich entnommen werden (Fig. 5h). Der Formträger 22 kann gleichzeitig wieder in seine Ausgangsstellung zurückgedreht werden.

Wie in Fig. 5 gezeigt, können alle vier Seiten des zentralen Formträgers 21 für den Herstellungsprozess nutzbar gemacht werden, wenn der Formträger 21 die Form eines Kubus hat und in 90°-Schritten gedreht wird. Es ist aber auch denkbar, einen nur zweiseitigen Formträger zu verwenden, der in 180°-Schritten gedreht wird.

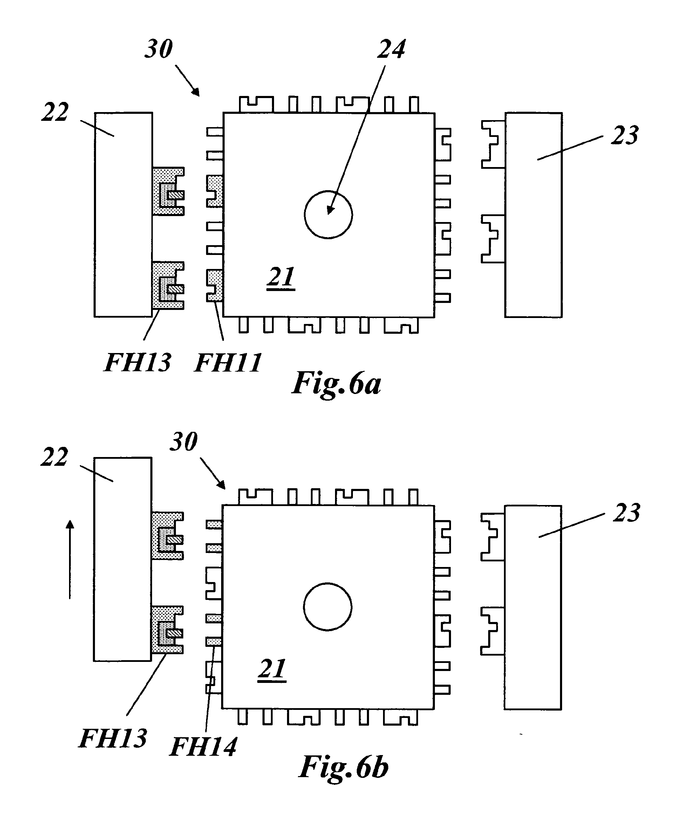

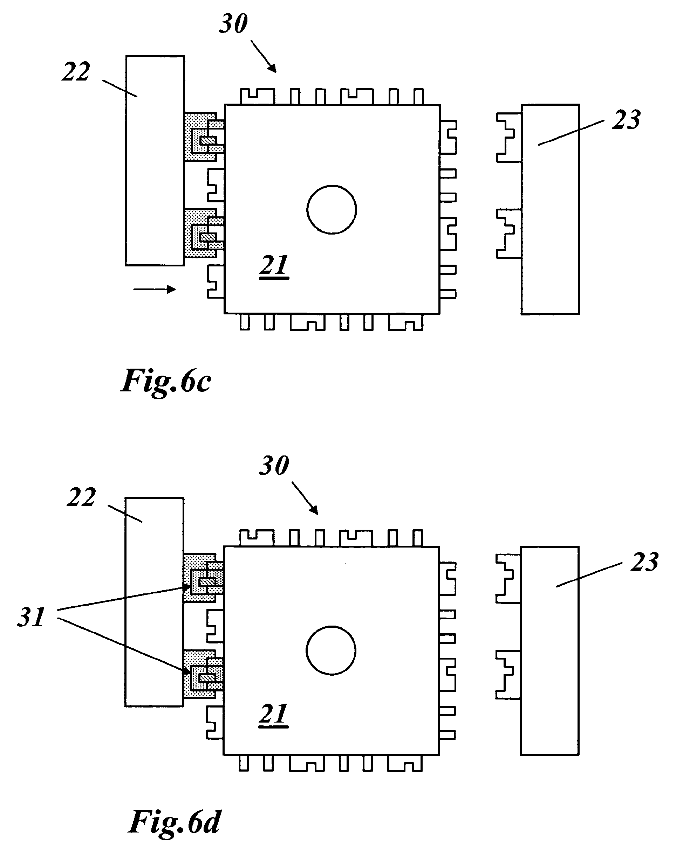

Weiterhin ist es denkbar, anstelle der Drehung des äusseren Formträgers 22 eine lineare Verschiebung quer zur Schliessachse 13 vorzusehen, wie dies in den Teilfiguren der Fig. 6 dargestellt ist: Die Fig. 6a entspricht dabei der Fig. 5d nach dem Abziehen des Formträgers 22. Durch lineare Verschiebung des abgezogenen Formträgers 22 werden nun bei dieser Verfahrensvariante die Formhälften FH13 mit dem darin befindlichen einseitig angespritzten Zentralkörper auf die nächsten Formhälften FH14 ausgerichtet (Fig. 6b) und die neu gebildete Form geschlossen (Fig. 6c). Durch Einspritzen eines weiteren Kunststoffs wird der zweite Anspritzteil erzeugt und das Kunststoff-Formteil 31 dadurch vervollständigt (Fig. 6d).

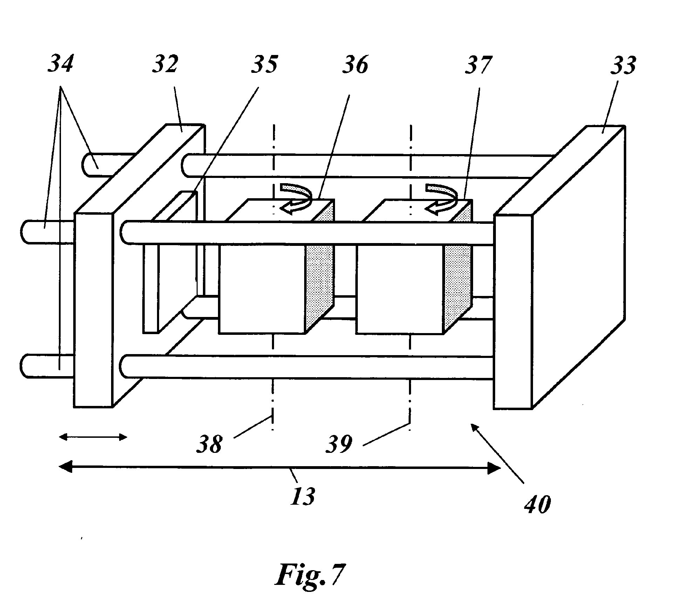

Es ist aber auch denkbar, gemäss Fig. 7 eine Spritzgiessvorrichtung 40 zur Durchführung des Verfahrens einzusetzen, die zwischen zwei äusseren Formträgern 32, 33 zwei um parallele Drehachsen 38, 39 drehbare zentrale Formträger 36, 37 aufweist. Bei dieser Konfiguration ist die der Formhälfte FH1 aus Fig. 1 entsprechende Formhälfte auf dem Formträger 37 angeordnet, die der Formhälfte FH3 aus Fig. 1 entsprechende Formhälfte auf dem Formträger 36. Die der Formhälfte FH2 aus Fig. 1 entsprechende Formhälfte ist (in Fig. 7 nicht sichtbar) auf der Innenseite des Förmträgers 33 angeordnet, während der Formträger 35 dem Formträger FH4 aus Fig. 1 entspricht. Da hier die verschiedenen Formhälften nicht alternierend auf einem der Formkörper angeordnet werden müssen, wie dies in Fig. 5 und 6 für die Formhälften FH11 und FH14 der Fall ist, lässt sich eine höhere Dichte der Kavitäten und damit eine grössere Anzahl von Formkörpern pro Zyklus verwirklichen. Andererseits ist aber auch eine weitere Stelle an der Vorrichtung erforderlich, an der eingespritzt wird.

Durch Zusammenschieben der beiden Formträger 33 und 37 entlang der durch die Holme 34 definierten Schliessachse wird die erste Form für den Zentralkörper gebildet. Nach dem Wegfahren und Drehen des Formträgers 37 mit dem gebildeten Zentralkörper wird durch Zusammenschieben der Formträger 36 und 37 die zweite Form für den ersten Anspritzteil am Zentralkörper gebildet. Nach dem Wegfahren und Drehen des Formträgers mit dem angespritzten Zentralkörper wird durch Zusammenschieben der Formträger 32 und 36 die dritte Form für den zweiten Anspritzteil gebildet. Auf diese Weise werden im Rahmen einer gemeinsamen Schliessachse die einzelnen Fertigungsstufen des Formteils von einem Formträger zum nächsten durchgereicht, ohne dass das gebildete Zwischenprodukt aus der jeweiligen Formhälfte entnommen und durch andere Mittel transportiert werden muss.

Schliesslich ist es im Rahmen der Erfindung aber auch denkbar, in einer Anordnung nach Fig. 4 die einzelnen Verfahrenschritte in umgekehrter Reihenfolge durchzuführen, d.h. zunächst den Zentralkörper zwischen den Formträgern 21 und 22 durch Spritzgiessen zu formen, dann den Formträger 22 um die Achse 25 zu drehen bzw. wie in Fig. 6b linear zu verschieben, um zwischen den Formträgern 21 und 22 den ersten Anspritzteil anzuspritzen. Dann wird der Formträger 21 um die Achse 24 um 180° gedreht und der zweite Anspritzteil zwischen den Formträgern 21 und 23 angespritzt.

### Bezugszeichenliste

- 10,11,16: Einspritzkanal
- 12,12': Zentralkörper
- 13: Schliessachse
- 14,24,25: Drehachse
- 15,17: Anspritzteil
- 15',17': Anspritzteil
- 18,18': Kunststoff-Formteil
- 19: Umhüllung
- 20,20',30,40: Spritzgiessvorrichtung
- 21,22,23: Formträger
- 26: Zentralkörper
- 27,28: Anspritzteil
- 29,31: Kunststoff-Formteil
- 32,33,36,37: Formträger
- 34: Holm
- 35: Formhälfte
- 38,39: Drehachse
- FH1,..FH4: Formhälfte
- FH1',..,FH4': Formhälfte
- FH11,..,FH14: Formhälfte
- K1,..,K3: Kavität
- K1',..,K3': Kavität
- T1,..,T3: Trennebene
- T1',..,T3': Trennebene

## Patentansprüche

1. Verfahren zum Herstellen eines mehrkomponentigen Kunststoff-Formteils (18, 18'; 29, 31) mittels Spritzgusstechnik, bei welchem Verfahren in einem ersten Schritt ein in einer ersten Formhälfte (FH1, FH1') sitzender Zentralkörper (12, 12'; 26) bereitgestellt wird, in einem zweiten Schritt die erste Formhälfte (FH1, FH1') mit dem darin sitzenden Zentralkörper (12, 12'; 26) durch eine zweite Formhälfte (FH3, FH3') zu einer ersten geschlossenen Form (FH1, FH3 bzw. FH1', FH3') ergänzt wird, in welcher der Zentralkörper (12, 12'; 26) an eine durch die zweite Formhälfte (FH3, FH3') gebildete erste Kavität (K2, K2') angrenzt, in einem dritten Schritt durch Einspritzen eines ersten Kunststoffs in die erste Kavität (K2, K2') ein erster Anspritzteil (15, 15'; 27) an den Zentralkörper (12, 12'; 26) angespritzt wird, in einem vierten Schritt die erste Form (FH1, FH3 bzw. FH1', FH3') durch Abheben der ersten Formhälfte (FH1, FH1') geöffnet, in einem fünften Schritt die zweite Formhälfte (FH3, FH3') mit der darin verbliebenen Kombination aus Zentralkörper (12, 12'; 26) und erstem Anspritzteil (15, 15'; 27) durch eine dritte Formhälfte (FH4, FH4') zu einer zweiten geschlossenen Form (FH3, FH4 bzw. FH3', FH4') ergänzt wird, in welcher der Zentralkörper (12, 12'; 26) an eine durch die dritte Formhälfte (FH4, FH4') gebildete zweite Kavität (K3, K3') angrenzt, und in einem sechsten Schritt durch Einspritzen eines zweiten Kunststoffs in die zweite Kavität (K3, K3') ein zweiter Anspritzteil (17, 17'; 28) an den Zentralkörper (12, 12'; 26) angespritzt wird, **dadurch gekennzeichnet, dass** im ersten Schritt aus der ersten Formhälfte (FH1, FH1') und einer vierten Formhälfte (FH2, FH2') eine dritte geschlossene Form (FH1, FH1 bzw. FH1', FH2') mit einer dritten Kavität (K1, K1') gebildet und der Zentralkörper (12, 12'; 26) durch Einspritzen eines dritten Kunststoffs in die dritte Kavität (K1, K1') erzeugt wird.

2. Verfahren nach Anspruch 1, **dadurch gekennzeichnet, dass** zum Schliessen und Öffnen der drei Formen (FH1, FH1 bzw. FH1', FH2'; FH1, FH3 bzw. FH1', FH3'; FH3, FH4 bzw. FH3', FH4') die entsprechenden Formhälften entlang einer gemeinsamen Schliessachse (13) relativ zueinander verfahren werden.

3. Verfahren nach Anspruch 2, **dadurch gekennzeichnet, dass** sich die zweite Formhälfte (FH3, FH3') und die vierte Formhälfte (FH2, FH2') einander gegenüber stehen, und dass zwischen dem ersten und dem zweiten Schritt die erste Formhälfte (FH1, FH1') mit dem darin sitzenden Zentralkörper (12, 12'; 26) um eine senkrecht zur Schliessachse (13) orientierte erste Drehachse (14) gedreht wird.

4. Verfahren nach Anspruch 3, **dadurch gekennzeichnet, dass** die erste Formhälfte (FH1, FH1') und die dritte Formhälfte (FH4, FH4') nebeneinander und parallel zueinander auf einem gemeinsamen Formträger (21) angeordnet sind, und dass zwischen dem vierten und dem fünften Schritt die zweite Formhälfte (FH3, FH3') mit der darin verbliebenen Kombination aus Zentralkörper (12, 12'; 26) und erstem Anspritzteil (15, 15'; 27) quer zur Schliessachse (13) von einer der ersten Formhälfte (FH1, FH1') gegenüberliegenden Position zu einer der dritten Formhälfte (FH4, FH4') gegenüberliegenden Position verfahren wird.

5. Verfahren nach Anspruch 4, **dadurch gekennzeichnet, dass** die zweite Formhälfte (FH3, FH3') mit der darin verbliebenen Kombination aus Zentralkörper (12, 12'; 26) und erstem Anspritzteil (15, 15'; 27) linear verfahren wird.

6. Verfahren nach Anspruch 4, **dadurch gekennzeichnet, dass** die zweite Formhälfte (FH3, FH3') mit der darin verbliebenen Kombination aus Zentralkörper (12, 12'; 26) und erstem Anspritzteil (15, 15'; 27) um eine parallel zur Schliessachse (13) orientierte zweite Drehachse (25) gedreht wird.

7. Verfahren nach einem der Ansprüche 1 bis 6, **dadurch gekennzeichnet, dass** als erster, zweiter und dritter Kunststoff unterschiedliche Kunststoffe verwendet werden.

8. Verfahren nach einem der Ansprüche 1 bis 6, **dadurch gekennzeichnet, dass** als erster und zweiter Kunststoff der gleiche Kunststoff verwendet wird, und dass der erste und zweite Anspritzteil (15' bzw. 17') den Zentralkörper (12') in Form einer Umhüllung (19) vollständig umschliessen.

9. Verfahren nach einem der Ansprüche 1 bis 8, **dadurch gekennzeichnet, dass** mit einer Mehrzahl von parallel eingesetzten Formen bzw. Formhälften (FH1,..,FH4; FH1',..,FH4') gleichzeitig mehrere Kunststoff-Formteile (18, 18'; 29, 31) hergestellt werden.

10. Verfahren nach Anspruch 2, **dadurch gekennzeichnet, dass** die dritte Formhälfte (FH4, FH4') und die vierte Formhälfte (FH2, FH2') einander gegenüber stehen, dass zwischen dem ersten und dem zweiten Schritt die erste Formhälfte (FH1, FH1') mit dem darin sitzenden Zentralkörper (12, 12'; 26) um eine senkrecht zur Schliessachse (13) orientierte erste Drehachse (39) gedreht wird, und dass zwischen dem vierten und dem fünften Schritt die zweite Formhälfte (FH3, FH3') mit der darin verbliebenen Kombination aus Zentralkörper (12, 12'; 26) und erstem Anspritzteil (15, 15'; 27) um eine senkrecht zur Schliessachse (13) orientierte dritte Drehachse (38) gedreht wird.

11. Verfahren nach Anspruch 10, **dadurch gekennzeichnet, dass** als erster, zweiter und dritter Kunststoff unterschiedliche Kunststoffe verwendet werden.

12. Verfahren nach Anspruch 10, **dadurch gekennzeichnet, dass** als erster und zweiter Kunststoff der gleiche Kunststoff verwendet wird, und dass der erste und zweite Anspritzteil (15' bzw. 17') den Zentralkörper (12') in Form einer Umhüllung (19) vollständig umschliessen.

13. Verfahren nach einem der Ansprüche 10 bis 12, **dadurch gekennzeichnet, dass** mit einer Mehrzahl von parallel eingesetzten Formen bzw. Formhälften (FH1,..,FH4; FH1',..,FH4') gleichzeitig mehrere Kunststoff-Formteile (18, 18'; 29, 31) hergestellt werden.

14. Spritzgiessvorrichtung (20, 20'; 30) zur Durchführung des Verfahrens nach einem der Ansprüche 1 bis 9, welche Spritzgiessvorrichtung (20, 20'; 30) wenigstens drei entlang einer gemeinsamen Schliessachse (13) hintereinander angeordnete und entlang der Schliessachse (13) relativ zueinander verfahrbare Formträger (21, 22, 23) umfasst, wobei ein mittlerer Formträger (21) um eine senkrecht zur Schliessachse (13) orientierte erste Drehachse (24) drehbar ist, **dadurch gekennzeichnet, dass** wenigstens einer der anderen Formträger (22, 23) in einer Ebene quer zur Schliessachse (13) bewegbar ist.

15. Spritzgiessvorrichtung nach Anspruch 14, **dadurch gekennzeichnet, dass** wenigstens einer der anderen Formträger (22, 23) in der Ebene quer zur Schliessachse (13) linear verfahrbar ist.

16. Spritzgiessvorrichtung nach Anspruch 14, **dadurch gekennzeichnet, dass** wenigstens einer der anderen Formträger (22, 23) um eine parallel zur Schliessachse (13) orientierte zweite Drehachse (25) drehbar ist.

17. Spritzgiessvorrichtung nach einem der Ansprüche 14 bis 16, **dadurch gekennzeichnet, dass** die erste Formhälfte (FH1, FH1') und die dritte Formhälfte (FH4, FH4') nebeneinander und parallel zueinander auf dem mittleren Formträger (21) angeordnet sind.

18. Spritzgiessvorrichtung nach einem der Ansprüche 14 bis 17, **dadurch gekennzeichnet, dass** auf den Formträgern (21, 22, 23) zur gleichzeitigen Herstellung einer Vielzahl von Kunststoff-Formteilen (18, 18'; 29, 31) jeweils eine Vielzahl von gleichartigen Formhälften nebeneinander angeordnet sind.

## Claims

1. Method for producing a multicomponent plastic molded part (18, 18'; 29, 31) by means of injection molding technology, wherein in the method, in a first step a central body (12, 12'; 26) seated in a first mold half (FH1, FH1') is provided, in a second step the first mold half (FH1, FH1') having the central body (12, 12'; 26) seated therein is supplemented by a second mold half (FH3, FH3') to form a first closed mold (FH 1, FH3 or FH 1', FH3') in which the central body (12, 12'; 26) is adjacent to a first cavity (K2, K2') formed by the second mold half (FH3, FH3'), in a third step a first injection-molded part (15, 15'; 27) is injected onto the central body (12, 12'; 26) by injecting a first plastic into the first cavity (K2, K2'), in a fourth step the first mold (FH1, FH3 or FH1', FH3') is opened by lifting the first mold half (FH 1, FH1'), in a fifth step the second mold half (FH3, FH3') having the combination of the central body (12, 12'; 26) and the first injection-molded part (15, 15'; 27) remaining therein is supplemented by a third mold half (FH4, FH4') to form a second closed mold (FH3, FH4 or FH3', FH4') in which the central body (12, 12'; 26) is adjacent to a second cavity (K3, K3') formed by the third mold half (FH4, FH4'), and in a sixth step a second injection-molded part (17, 17'; 28) is injected onto the central body (12, 12'; 26) by injecting a second plastic into the second cavity (K3, K3'), **characterized in that** in the first step a third closed mold (FH1, FH2 or FH1', FH2') having a third cavity (K1, K1') is formed from the first mold half (FH1, FH1') and a fourth mold half (FH2, FH2'), and the central body (12, 12'; 26) is produced by injecting a third plastic into the third cavity (K1, K1').

2. Method according to Claim 1, **characterized in that** the corresponding mold halves are moved relative to one another along a shared closing axis (13) in order to close and open the three molds (FH1, FH2 or FH1', FH2'; FH1, FH3 or FH1', FH3'; FH3, FH4 or FH3', FH4').

3. Method according to Claim 2, **characterized in that** the second mold half (FH3, FH3') and the fourth mold half (FH2, FH2') are situated opposite from one another, and that between the first and the second step the first mold half (FH 1, FH1') having the central body (12, 12'; 26) seated therein is turned about a first rotational axis (14) oriented perpendicularly with respect to the closing axis (13).

4. Method according to Claim 3, **characterized in that** the first mold half (FH 1, FH1') and the third mold half (FH4, FH4') are situated next to and parallel to one another on a shared mold carrier (21), and that between the fourth and the fifth step the second mold half (FH3, FH3') having the combination of the central body (12, 12'; 26) and the first injection-molded part (15, 15'; 27) remaining therein is moved transversely with respect to the closing axis (13), from a position opposite from the first mold half (FH1, FH1') to a position opposite from the third mold half (FH4, FH4').

5. Method according to Claim 4, **characterized in that** the second mold half (FH3, FH3') having the combination of the central body (12, 12'; 26) and the first injection-molded part (15, 15'; 27) remaining therein is linearly moved.

6. Method according to Claim 4, **characterized in that** the second mold half (FH3, FH3') having the combination of the central body (12, 12'; 26) and the first injection-molded part (15, 15'; 27) remaining therein is turned about a second rotational axis (25) oriented parallel to the closing axis (13).

7. Method according to one of Claims 1 through 6, **characterized in that** different plastics are used as the first, second, and third plastic.

8. Method according to one of Claims 1 through 6, **characterized in that** the same plastic is used as the first and second plastic, and that the first and second injection-molded part (15' and 17', respectively) completely enclose the central body (12') in the form of a casing (19).

9. Method according to one of Claims 1 through 8, **characterized in that** multiple plastic molded parts (18, 18'; 29, 31) are simultaneously produced using a plurality of molds or mold halves (FH1,..,FH4; FH1',..,FH4') used in parallel.

10. Method according to Claim 2, **characterized in that** the third mold half (FH4, FH4') and the fourth mold half (FH2, FH2') are situated opposite from one another, that between the first and the second step the first mold half (FH 1, FH1') having the central body (12, 12'; 26) seated therein is turned about a first rotational axis (39) oriented perpendicularly with respect to the closing axis (13), and that between the fourth and the fifth step the second mold half (FH3, FH3') having the combination of the central body (12, 12'; 26) and the first injection-molded part (15, 15'; 27) remaining therein is turned about a third rotational axis (38) oriented perpendicularly with respect to the closing axis (13).

11. Method according to Claim 10, **characterized in that** different plastics are used as the first, second, and third plastic.

12. Method according to Claim 10, **characterized in that** the same plastic is used as the first and second plastic, and that the first and second injection-molded part (15' and 17', respectively) completely enclose the central body (12') in the form of a casing (19).

13. Method according to one of Claims 10 through 12, **characterized in that** multiple plastic molded parts (18, 18'; 29, 31) are simultaneously produced using a plurality of molds or mold halves (FH1,..,FH4; FH1',..,FH4') used in parallel.

14. injection molding device (20, 20'; 30) for carrying out the method according to one of Claims 1 through 9, the injection molding device (20, 20'; 30) including at least three mold carriers (21, 22, 23) which are situated one behind the other along a shared closing axis (13) and which are movable relative to one another along the closing axis (13), wherein a a middle mold carrier (21) is rotatable about a first rotational axis (24) oriented perpendicularly with respect to the closing axis (13), **characterized in that** at least one of the other mold carriers (22, 23) is movable in a plane transverse to the closing axis (13).

15. Injection molding device according to Claim 14, **characterized in that** at least one of the other mold carriers (22, 23) is linearly movable in the plane transverse to the closing axis (13).

16. Injection molding device according to Claim 14, **characterized in that** at least one of the other mold carriers (22, 23) is rotatable about a second rotational axis (25) oriented parallel to the closing axis (13).

17. Injection molding device according to one of Claims 14 through 16, **characterized in that** the first mold half (FH 1, FH 1') and the third mold half (FH4, FH4') are situated next to and parallel to one another on the middle mold carrier (21).

18. Injection molding device according to one of Claims 14 through 17, **characterized in that** in each case a plurality of mold halves of the same kind are situated next to one another on the mold carriers (21, 22, 23) for simultaneously producing a plurality of plastic molded parts (18, 18'; 29, 31).

## Revendications

1. Procédé pour fabriquer une pièce moulée en matière plastique multi-composants (18, 18' ; 29, 31) au moyen d'une technique de moulage par injection, procédé dans lequel, dans une première étape, un corps central (12, 12' ; 26) placé dans un premier demi-moule (FH1, FH1') est mis à disposition, dans une deuxième étape, le premier demi-moule (FH1, FH1'), avec le corps central (12, 12' ; 26) qui y est placé, est complété par un deuxième demi-moule (FH3, FH3') pour former un premier moule fermé (FH 1 , FH3 ou FH1', FH3') dans lequel le corps central (12, 12' ; 26) est adjacent à une première empreinte (K2,K2') formée par le deuxième demi-moule (FH3, FH3'), dans une troisième étape, par injection d'une première matière plastique dans la première empreinte (K2,K2') une première pièce rapportée par injection (15,15' ; 27) est rapportée par injection sur le corps central (12, 12' ; 26), dans une quatrième étape, le premier moule (FH1, FH3 ou FH1', FH3') est ouvert par soulèvement du premier demi-moule (FH1, FH1'), dans une cinquième étape, le deuxième demi-moule (FH3, FH3'), avec la combinaison composée du corps central (12, 12' ; 26) et de la première pièce rapportée par injection (15, 15 ', 27) qui y est restée, est complété par un troisième demi-moule (FH4, FH4') pour former un deuxième moule fermé (FH3,FH4 ou FH3', FH4') dans lequel le corps central (12, 12' ; 26) est adjacent à une deuxième empreinte (K3, K3') formée par le troisième demi-moule (FH4, FH4') et, dans une sixième étape, par injection d'une deuxième matière plastique dans la deuxième empreinte (K3,K3'), une deuxième pièce rapportée par injection (17, 17' ; 28) est injectée sur le corps central (12, 12' ; 26), **caractérisé par le fait que**, dans la première étape, un troisième moule fermé (FH1, FH2 ou FH1', FH2') possédant une troisième empreinte (K1, K1') est formé du premier demi-moule (FH1, FH 1') et d'un quatrième demi-moule (FH2, FH2') et le corps central (12, 12' ; 26) est produit par injection d'une troisième matière plastique dans la troisième empreinte (K1, K1').

2. Procédé selon la revendication 1, **caractérisé par le fait que**, pour la fermeture et l'ouverture des trois moules (FH 1, FH2 ou FH1', FH2' ; FH1, FH3 ou FH1', FH3'; FH3, FH4 ou FH3', FH4'), les demi-moules correspondants sont déplacés en translation l'un par rapport à l'autre le long d'un axe de fermeture commun (13).

3. Procédé selon la revendication 2, **caractérisé par le fait que** le deuxième demi-moule (FH3, FH3') et le quatrième demi-moule (FH2, FH2') sont face à face et **par le fait qu'**entre la première et la deuxième étape, le premier demi-moule (FH 1 , FH1') est tourné, avec le corps central (12, 12' ; 26) qui s'y trouve, autour d'un premier axe de rotation (14) orienté perpendiculairement à l'axe de fermeture (13).

4. Procédé selon la revendication 3, **caractérisé par le fait que** le premier demi-moule (FH1, FH1') et le troisième demi-moule (FH4, FH4') sont disposés l'un à côté de l'autre et parallèlement entre eux sur un support de moule commun (21) et qu'entre la quatrième et la cinquième étape, le deuxième demi-moule (FH3, FH3'), avec la combinaison formée du corps central (12, 12' ; 26) et de la première pièce rapportée par injection (15, 15' ; 27) qui y est restée, est transporté, transversalement à l'axe de fermeture (13), d'une position face au premier demi-moule (FH1, FH1'), à une position face au troisième demi-moule (FH4, FH4').

5. Procédé selon la revendication 4, **caractérisé par le fait que** le deuxième demi-moule (FH3, FH3'), avec la combinaison formée du corps central (12, 12' ; 26) et de la première pièce rapportée par injection (15, 15' ; 27) qui y est restée, est déplacé linéairement.

6. Procédé selon la revendication 4, **caractérisé par le fait que** le deuxième demi-moule (FH3, FH3'), avec la combinaison formée du corps central (12, 12' ; 26) et de la première pièce rapportée par injection (15, 15' ; 27) qui y est restée est tourné autour d'un deuxième axe de rotation (25) orienté parallèlement à l'axe de fermeture (13).

7. Procédé selon l'une des revendications 1 à 6, **caractérisé par le fait que** l'on utilise des matières plastiques différentes pour les première, deuxième et troisième matières plastiques.

8. Procédé selon l'une des revendications 1 à 6, **caractérisé par le fait que**, pour les première et deuxième matières plastiques, on utilise la même matière plastique et **par le fait que** les première et deuxième pièces rapportées par injection (15' et 17' respectivement) entourent entièrement le corps central (12') en formant une enveloppe (19).

9. Procédé selon l'une des revendications 1 à 8, **caractérisé par le fait qu'**avec une pluralité de moules ou de demi-moules (FH1,..,FH4 ; FH1',..,FH4') disposés parallèlement, on fabrique simultanément plusieurs pièces moulées en matière plastique (18, 18' ; 29, 31).

10. Procédé selon la revendication 2, **caractérisé par le fait que** le troisième demi-moule (FH4, FH4') et le quatrième demi-moule (FH2, FH2') sont face à face, qu'entre la première et la deuxième étape, le premier demi-moule (FH 1 , FH1'), avec le corps central (12, 12' ; 26) qui s'y trouve, est tourné autour d'un premier axe de rotation (39) orienté perpendiculairement à l'axe de fermeture (13) et qu' entre la quatrième étape et la cinquième étape, le deuxième demi-moule (FH3, FH3'), avec la combinaison du corps central (12, 12' ; 26) et de la première pièce rapportée par injection (15, 15' ; 27) qui y est restée, est tourné autour d'un troisième axe de rotation (38) orienté perpendiculairement à l'axe de fermeture (13).

11. Procédé selon la revendication 10, **caractérisé par le fait que**, pour les première, deuxième et troisième matières plastiques, on utilise des matières plastiques différentes.

12. Procédé selon la revendication 10, **caractérisé par le fait que**, pour les première et deuxième matières plastiques, on utilise la même matière plastique et que les première et deuxième pièces rapportées par injection (15' et 17' respectivement) entourent entièrement le corps central (12') en formant une enveloppe (19).

13. Procédé selon l'une des revendications 10 à 12, **caractérisé par le fait qu'**avec une pluralité de moules ou de demi-moules (FH1,.., FH4 ; FH1',.., FH4') disposés parallèlement, on fabrique simultanément plusieurs pièces moulées en matière plastique (18, 18' ; 29, 31).

14. Appareil de moulage par injection (20, 20' ; 30) pour la mise en oeuvre du procédé selon l'une des revendications 1 à 9, lequel appareil de moulage par injection (20, 20' ; 30) comprend au moins trois supports de moule (21, 22, 23) qui sont disposés l'un derrière l'autre le long d'un axe de fermeture commun (13) et qui sont aptes à être déplacés l'un par rapport à l'autre le long de l'axe de fermeture (13), un support de moule central (21) pouvant être tourné autour d'un premier axe de rotation (24) orienté perpendiculairement à l'axe de fermeture (13), **caractérisé par le fait qu'**au moins l'un des autres supports de moule (22, 23) peut être déplacé dans un plan transversal à l'axe de fermeture (13).

15. Appareil de moulage par injection selon la revendication 14, **caractérisé par le fait qu'**au moins l'un des autres supports de moule (22, 23) est apte à être déplacé linéairement dans le plan transversal à l'axe de fermeture (13).

16. Appareil de moulage par injection selon la revendication 14, **caractérisé par le fait qu'**au moins l'un des autres supports de moule (22, 23) est apte à être tourné autour d'un deuxième axe de rotation (25) orienté parallèlement à l'axe de fermeture (13).

17. Appareil de moulage par injection selon l'une des revendications 14 à 16, **caractérisé par le fait que** le premier demi-moule (FH1, FH1') et le troisième demi-moule (FH4, FH4') sont disposés l'un à côté de l'autre et parallèlement entre eux sur le support de moule central (21).

18. Appareil de moulage par injection selon l'une des revendications 14 à 17, **caractérisé par le fait que**, pour la fabrication simultanée de plusieurs pièces moulées en matière plastique (18, 18' ; 29, 31), plusieurs demi-moules respectifs du même type sont disposés l'un à côté de l'autre sur les supports de moule (21, 22, 23).
